(19) Europäisches Patentamt
European Patent Office
Office européen des brevets

(11) **EP 1 772 713 A1**

(12) **EUROPEAN PATENT APPLICATION**
published in accordance with Art. 158(3) EPC

(43) Date of publication:
**11.04.2007 Bulletin 2007/15**

(21) Application number: **05765660.5**

(22) Date of filing: **12.07.2005**

(51) Int Cl.:
**G01H 17/00** (2006.01)    **G01H 3/00** (2006.01)
**G10K 15/00** (2006.01)

(86) International application number:
**PCT/JP2005/012812**

(87) International publication number:
**WO 2006/011356 (02.02.2006 Gazette 2006/05)**

(84) Designated Contracting States:
**DE DK NL**

(30) Priority: **29.07.2004 JP 2004221942**

(71) Applicant: **Wakayama University**
**Wakayama-shi, Wakayama 6408510 (JP)**

(72) Inventors:
- **MORISE, Masanori,**
  **c/o WAKAYAMA UNIVERSITY**
  **Wakayama-shi,**
  **Wakayama 6408510 (JP)**
- **IRINO, Toshio,**
  **c/o WAKAYAMA UNIVERSITY**
  **Wakayama-shi, Wakayama 6408510 (JP)**

- **KAWAHARA, Hideki,**
  **c/o WAKAYAMA UNIVERSITY**
  **Wakayama-shi,**
  **Wakayama 6408510 (JP)**
- **BANNO, Hideki,**
  **c/o WAKAYAMA UNIVERSITY**
  **Wakayama-shi, Wakayama 6408510 (JP)**

(74) Representative: **Gray, James et al**
**Withers & Rogers LLP**
**Goldings House**
**2 Hays Lane**
**GB-London SE1 2HW (GB)**

(54) **IMPULSE-RESPONSIVE MEASUREMENT METHOD AND DEVICE**

(57)    A method, device, system, program and recording medium for impulse response measurement which can improve a measurement accuracy without lowering the S/N ratio over the whole range, from lower frequencies to higher frequencies, of a measuring signal are provided. A signal generation unit (21) of a device for impulse response measurement (10-1) generates a W-TSP signal (x(t)) having characteristics of a TSP signal and a Log-TSP signal. A D/A conversion unit (22) converts the digital signal (x(t)) into an analog signal (x(t)) and outputs the converted signal to a headphone (2) or a speaker (5). An A/D conversion unit (23) inputs an analog signal (y(t)) received by a microphone (3) or a microphone (6) and converts the inputted signal into a digital signal (y(t)). An inverse signal generation unit (24) generates an inverse W-TSP signal (x(t)). A convolution unit (25) convolutes the signal (y(t)) and the inverse W-TSP signal (x$^{-1}$(t)) thereby to calculate an impulse response (g(t)).

FIG. 3

device for impulse response measurment    10-1

EP 1 772 713 A1

**Description**

**Field of the invention**

The present invention relates to a method for an impulse response measurement using the cross-correlation method, and particularly to a method for measuring an impulse response as a basis of acoustic transmission properties of an audio instrument or a room, using as a measuring signal, for example, an improved TSP (Time Stretched Pulses) signal.

**Background of the invention**

An impulse response measurement of an acoustic transmission system of an audio instrument such as a headphone or a speaker or a room is of great importance in obtaining the audio transmission properties thereof. Among methods for measuring such an impulse response are, for example, the M sequence (Maximum length sequence) method and the TSP method. In the M sequence method, the impulse response can be obtained very quickly with the use of an M sequence signal as a sound source signal and fast Hadamard transformation in calculating the cross-correlation between the sound source signal and the response signal (see Nonpatent Reference 1). The TSP method, on the other hand, uses as a sound source signal a TSP signal, a signal having frequency changing from high frequency to low frequency, or from low frequency to high frequency, (a signal of sweeping frequency), the signal being provided with higher energy by stretching an impulse along the time axis (see Nonpatent Reference 2).

With these methods, it is possible to measure an impulse response with a high S/N ratio, more particularly, with a higher S/N ratio than in the case of using a short-time pulse signal. Accordingly, sufficient precision can be achieved in measurement of an acoustic instrument such as a headphone in an anechoic room or in a noise attenuating room of high performance.

However, in measuring an impulse response representing acoustic properties of a transfer function of a common room, the measurement precision is problematically decreased because of a substantially declined S/N ratio, particularly in the lower frequency band. This is because, both the M sequence signal and the TSP signal having flat amplitude-frequency characteristics, the energy in the lower frequency band is insufficient compared with that in the higher frequency band, when obtaining an impulse response at each 1/3 octave band, for example. Further, the energy of a background noise in the room measured at each 1/3 octave is likely to be large in the lower and the higher frequency bands. Therefore, the measurement precision of the impulse response is further decreased in the lower frequency band.

Among methods for increasing an S/N ratio in the prior art to overcome this problem are:

(1) increasing the number of synchronous calculations.
(2) generating loud the measuring signal (an M sequence signal or a TSP signal).
(3) elongating the measuring signal.

As for the method of above (1), however, with an excessive amount of synchronous calculations being applied, effects of time-varying factors such as change in temperature of the medium and movement of the atmosphere caused by the air-conditioning apparatus may be brought about in the room (see Nonpatent Reference 3). With the method of above (2), although it is possible to improve the S/N ratio against the background noise, the S/N ratio cannot be improved to more than a certain extent eventually because of increasing a nonlinear distortion in a measuring system (see Nonpatent Reference 4). While the S/N ratio can thus be improved most effectively with the method of above (3), the cost of calculation is increased in calculating the impulse response. Further, effects of time-varying factors are not negligible, as is the case with above (1), if the measuring signal is too long.

Therefore, for the purpose of overcoming these problems, the TSP method with the use of logarithm (the Logarithmic-TSP method or Log-TSP) for increasing energy in the lower frequency band has been proposed (see Nonpatent Reference 5). With this Log-TSP method, the S/N ratio in the lower frequency band can be increased, and effects of harmonic distortion as a nonlinear distortion can substantially be removed (see Nonpatent Reference 6). It is disclosed that, in a measurement under an actual environment using the Log-TSP method, effects of harmonic distortion is improved by about 10 dB (see Nonpatent Reference 7).

Also disclosed is a method for carrying out an effective acoustic measurement in a nonmeasuring system under an effect of a background noise having the higher spectrum in the lower frequency, the method utilizing a high-powered measuring signal having a good S/N ratio in the lower frequency band (see Patent Reference 1). Further, another impulse response measurement method in view of computation time has been proposed, in which processes of differential timing shift and inverse differential timing shift are performed to output measuring signals without interruption, making it possible to calculate an impulse response with a good S/N ratio in a short period of time (see Patent Reference 2). Further, a method for estimating a margin of error of an impulse response measurement has been proposed, in which a value of correlation between impulse responses having been measured using two TSP signals of different pulse widths (see Patent Reference 3).

Nonpatent Reference 1: Jun Kashiwagi, M sequence and its application, Published by Shoko-do, Tokyo, 1996

Nonpatent Reference 2: N. Aoshima, Computer-generated pulse signal applied for sound measurement, J. Acoust, Soc, AM., vol. 69 no. 5, pp. 1484-1488, 1981

Nonpatent Reference 3: Fumiaki Sato, Measurement technique for in-room acoustic impulse response, Onkyo-shi, vol. 58 no. 10, pp. 669-676, 2002

Nonpatent Reference 4: Yutaka Kaneda, Experimental study of error in impulse response measurement with the M Sequence, Onkyo-shi, vol. 52 no. 10, pp. 752-759, 1996

Nonpatent Reference 5: Takuya Fujimoto, Study of the TSP signal for the purpose of improving the SN ration in the lower frequency band, Onko-ron, pp. 433-434, 1999

Nonpatent Reference 6: Takuya Fujimoto, Study of the TSP signal for the purpose of improving the SN ration in the lower frequency band - removing the harmonic distortion -, Onko-ron, pp. 555-556, 2000

Nonpatent Reference 7: Naoya Moritani, Yutaka Kaneda, Study of nonlinear harmonic distortion in the logarithmic TSP signal, Onko-ron pp. 637-638, 2004

Patent Reference 1: Japanese Patent Application Laid-Open H5-118906

Patent Reference 2: Japanese Patent Application Laid-Open H6-265400

Patent Reference 3: Japanese Patent Application Laid-Open H8-248077

## Disclosure of the invention

### (Problems to be solved)

However, comparing the Log-TSP method to the TSP method, energy in the higher frequency band is not large enough relative to that in the lower frequency band in the TSP method. Thus, in the Log-TSP method, precision in the higher frequency band is not as high as that in the TSP method.

The present invention, therefore, is intended to provide a method, a device, a system, a program and a recording medium for impulse response measurement, with which measurement precision can be improved over the whole range of the measuring signal, from the lower frequency band to the higher frequency band, without decreasing the S/N ratio.

### (Means for solving the problems)

The principle of the present invention will be explained first. In order to improve the S/N ratio of measurement results as a whole, which was difficult with the prior art, the present invention focuses attention on the characteristic of the TSP signal that the energy at each 1/3 octave is concentrated in the higher frequency band and the characteristic of the Log-TSP signal that the energy is higher in the lower frequency band than that of the TSP signal, with which effects of harmonic distortion can substantially be eliminated. A signal is generated using these signals and used as a measuring signal.

A TSP signal and a Log-TSP signal can be represented by Formula (1) and (2) respectively, both of which are defined on Discrete Fourier Transform (DFT).

$$H_{TSP}(k) = \begin{cases} \exp(-j4m\pi k^2 / N^2) & (0 \le k \le N/2) \\ H_{TSP}^{*}(N-k) & (N/2 < k < N) \end{cases} \quad (1)$$

$$H_{Log-TSP}(k) = \begin{cases} 1 & (k = 0) \\ \dfrac{\exp(-jak\log(k))}{\sqrt{k}} & (1 \le k \le N/2) \\ H^*_{Log-TSP}(N-k) & (N/2 < k < N) \end{cases} \qquad (2)$$

where $a = 2m\pi/(N/2)\log(N/2)$ (m: integer)

Herein N represents a signal length of the TSP signal or the Log-TSP signal, and m is a parameter determining a pulse width, and k is a parameter determining a frequency, and the symbol * represents a complex conjugate.

While the TSP signal shown in Formula (1) has uniform energy in the whole frequency range, the Log-TSP signal shown in Formula (2) has higher energy in the lower frequency band then in the higher frequency band. Accordingly, under an actual environment where energy of the background noise is large in the lower frequency band and the higher frequency band, the measurement precision of an impulse response may vary substantially according to an energy proportion of the lower frequency band to the higher frequency band.

For this reason, a measuring signal to be used in the present invention (a Warped-TSP signal, which will be described as W-TSP signal hereinafter) is defined on Discrete Fourier Transform as in Formulas (3) to (5).

$$H(k) = \begin{cases} 1 & (k = 0) \\ b(k)\exp\{jC(w(k)y_1(k) + (1-w(k))y_2(k))\} & (1 \le k \le N/2) \\ H^*(N-k) & (N/2 < k < N) \end{cases} \qquad (3)$$

$$y_1(k) = a_2 k \log(k)/\beta$$

$$y_2(k) = \frac{1}{\beta}\left\{\frac{a_1}{2}k^2 + \left(2\pi - a_1\frac{N}{2}\right)k + a_3\right\}$$

$$w(k) = 1/\{1 + \exp(\alpha(k-n))\} \qquad (4)$$

$$b(k) = w(k)\frac{1}{\sqrt{k}} + (1-w(k))\frac{1}{\sqrt{n}}$$

$$a_1 = \frac{2\pi}{n\log(n) + N/2}$$

$$a_2 = \frac{a_1 n + 2\pi - a_1 N/2}{1 + \log(n)}$$

$$a_3 = a_2 n \log(n) - \frac{a_1 n^2}{2} - \left(2\pi - \frac{a_1 N}{2}\right)n \qquad (5)$$

$$C = \frac{C_1 - \text{mod}(C_1, \pi)}{C_1}$$

$$C_1 = w(N/2)y_1(N/2) + (1 - w(N/2))y_2(N/2)$$

Herein N is a signal length of the generated W-TSP signal, and k is a parameter determining a frequency, and b(k) is an energy function, and w(k) is a morphing function using a sigmoid function, and $\alpha$ is a parameter determining a morphing ratio which is a real number larger than 0, and $\beta$ is a parameter equivalent as in the case where m of the TSP signal is defined as m = N/(2$\beta$), and n is a parameter (1 ... N/2) determining characteristics of the W-TSP signal of the present invention. An actual frequency f can be represented using the parameter k representing the frequency as follows: f = (Fs/2)(k/N) where Fs is a sampling frequency.

In Formulas (3) and (4), $y_1(k)$ shows the characteristic of the Log-TSP signal, while $y_2(k)$ has the characteristic of the TSP signal. The both functions $y_1(k)$ and $Y_2(k)$ are designed so as to form a joint in the group delay region, the joint being smoothly connected with the function w(k). In other words, the both functions are connected in such a way that the group delay (the negative derivative of the phase) of the TSP signal and the Log-TSP signal is not discontinuous. Further, al, a2, a3 and C can be analytically defined as shown in Formula (5). As described above, n in Formulas (4) and (5) is a parameter determining the characteristic of the present invention. With smaller n (with n closer to 1) the W-TSP signal has a similar characteristic to the TSP signal, and with n closer to N/2 the W-TSP signal has a similar characteristic to the Log-TSP signal.

The impulse response may be obtained by convoluting the W-TSP signal H(k) on DFT in Formula (3) and the function $H^{-1}(k)$ having an inverse characteristic of the above-mentioned W-TSP signal H(k) which is represented as follows:

$$H^{-1}(k) = \begin{cases} 1 & (k = 0) \\ \dfrac{1}{b(k)}\exp\left\{ -jC(w(k)y_1(k) + (1 - w(k))y_2(k)) \right\} & (1 \le k \le N/2) \\ H^{-1*}(N - k) & (N/2 < k < N) \end{cases} \qquad (6)$$

As already described, the W-TSP signal is a signal with the use of the signal having a characteristic of the TSP signal in the higher frequency band and of the signal having a characteristic of the Log-TSP signal in the lower frequency band. More specifically, the frequency fn at the border between the higher and lower frequency bands can be represented as fn = (Fs/2) (n/N), using the parameter n in Formulas (4) and (5) where Fs is a sampling frequency. In other words, in the W-TSP signal with sweeping frequency, the higher frequency band extends from the maximum value of the changing frequency to fn, and the lower frequency band extends from fn to the minimum value of the changing frequency.

The method for measurement of impulse response of the present invention, therefore, is characterized in that a signal having a characteristic of the Log-TSP (Logarithmic-Time Stretched Pulses) signal in the lower frequency band and a characteristic of the TSP signal in the higher frequency band is generated, and the measuring signal is then output to a measuring system, and a response signal of the measuring signal from the measuring system is input, and convolution is performed of the response signal and an inverse measuring signal having an inverse characteristic of the measuring signal to measure the impulse response of the measuring system.

The device for impulse response measurement of the present invention comprises:

a signal generation unit for generating a signal having a characteristic of the Log-TSP signal in the lower frequency band and a signal having a characteristic of the TSP signal in the higher frequency band;
an output unit for outputting the measuring signal to a measuring system;
an input unit for inputting a response signal against the measuring signal from the measuring system;
an inverse signal generation unit for generating an inverse measuring signal having an inverse characteristic of the measuring signal; and
a convolution unit for measuring the impulse response of the measuring system by convoluting the response signal and the inverse measuring signal.

The impulse response measurement system of the present invention comprises:

a device for impulse response measurement for outputting a measuring signal with sweeping frequency, inputting a response signal against the measuring signal, and measuring the impulse response of the measuring system by convoluting the response signal and an inverse signal having an inverse characteristic of the measuring signal; and
a measuring system of which an impulse response is measured by inputting the measuring signal and outputting a response signal,

wherein the above-described device for impulse response measurement is provided.

The program for impulse response measurement of the present invention describes processes for measuring the impulse response of the measuring system and is to be executed by a computer included in the device for impulse response measurement, comprising processes to be executed of:

generating as a measuring signal with sweeping frequency a signal having a characteristic of the Log-TSP signal in the lower frequency band and a signal having a characteristic of the TSP signal in the higher frequency band; outputting the measuring signal to the measuring system; inputting a response signal against the measuring signal from the measuring system; generating an inverse measuring signal having an inverse characteristic of said measuring signal; and measuring the impulse response of the measuring system by convoluting said response signal and said inverse measuring signal.

The recording medium of the present invention is to store the above-described program for impulse response measurement. A frequency for determining a border between the above-described signal having a characteristic of the Log-TSP signal and the above-described signal having a characteristic of the TSP signal is set by means of a parameter. More specifically, the above-described signal having a characteristic of the Log-TSP signal is joined to the above-described signal having a characteristic of the TSP signal with the use of a morphing function.

**(Effects of the invention)**

According to the present invention, by generating as a measuring signal a W-TSP signal having a characteristic of the TSP signal and a characteristic of the Log-TSP signal, measurement accuracy can be improved in a well-balanced manner over the whole range, from lower frequencies to the higher frequencies, of the measuring signal without lowering the S/N ratio.

**Brief description of the drawings**

FIG 1 is an overall block diagram of impulse response measurement for a measuring system including a headphone on a dummy head.
FIG. 2 is an overall block diagram of impulse response measurement for a measuring system including a speaker.
FIG. 3 is a block diagram explaining a method and a device for impulse response measurement according to a first embodiment of the present invention.
FIG. 4 is a block diagram explaining a method and a device for impulse response measurement according to a second embodiment of the present invention.
FIG. 5 is a diagram showing a correspondence between an energy at each 1/3 octave and a frequency with respect to a background noise of the measuring system in FIG. 1 including a headphone.
FIG. 6 is a diagram showing a correspondence between an energy at each 1/3 octave and a frequency with respect to a background noise of the measuring system in FIG. 2 including a speaker.
FIG. 7 is a diagram showing a wave shape of an impulse response.
FIG. 8 is a comparative diagram showing a noise level in the measuring system in FIG. 1 including a headphone.
FIG. 9 is a comparative diagram showing a noise level in the measuring system in FIG. 2 including a speaker.

| | |
|---|---|
| 1, 4 | noise attenuating room |
| 2 | headphone |
| 3, 6 | microphone |
| 5 | speaker |
| 10, 10-1, 10-2 | device for impulse response measurement |
| 11 | display device |
| 21 | signal generation unit |
| 22 | D/A conversion unit |
| 23 | A/D conversion unit |
| 24 | inverse signal generation unit |

| 25 | convolution unit |
|---|---|
| 26 | parameter setting unit |

**Best modes for carrying out the invention**

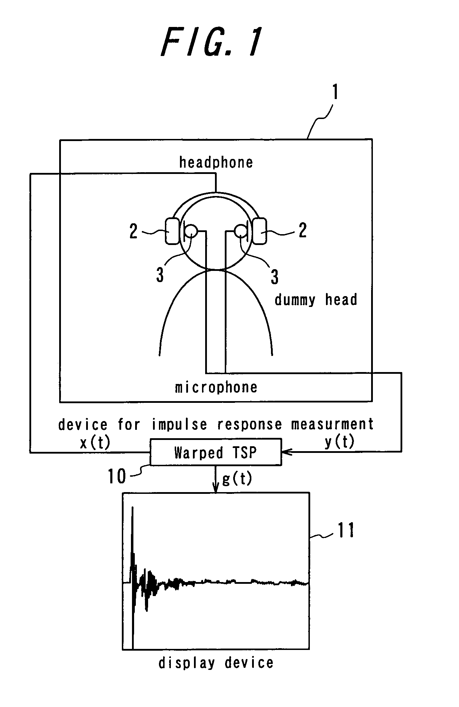

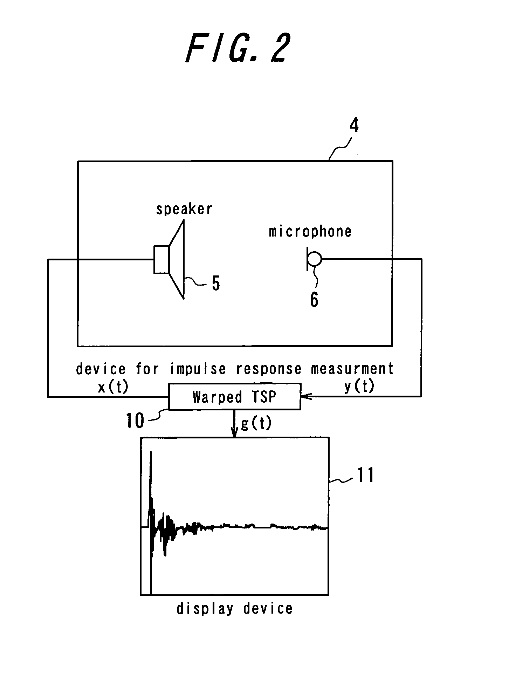

The present invention will be described hereinafter based upon preferred embodiments with reference to the drawings. The present invention can be applied not only to an impulse response measurement for a room but also to an impulse response measurement for a measuring system including a headphone on a dummy head, as shown in FIG. 1, or to an impulse response measurement for a measuring system including a speaker, as shown in FIG. 2.

With reference to FIG. 1, a system of measuring an impulse response for a measuring system including a headphone on a dummy head comprises a noise attenuating room 1 including a headphone 2 on a dummy head and a microphone 3, a device for impulse response measurement 10 for measuring an impulse response for the measuring system of the noise attenuating room 1 and a display device 11 for displaying e.g. a wave shape of the impulse response having been measured by the device for impulse response measurement 10. The device for impulse response measurement 10 outputs a signal $x(t)$, which is a W-TSP signal for measuring an impulse response, to the headphone 2. Herein $x(t)$ is obtained by transforming $H(k)$ on DFT shown in Formula (3) onto the time axis. The signal $x(t)$ is thus eradiated via the headphone 2 and then received by the microphone 3 as a signal $y(t)$. The device for impulse response measurement 10 inputs the signal $y(t)$ having been received by the microphone 3. The device for impulse response measurement 10 then calculates an impulse response $g(t)$ by convoluting the signal $y(t)$ in response to the W-TSP signal $x(t)$ and an inverse W-TSP signal $x^{-1}(t)$ having an inverse characteristic of the W-TSP signal $x(t)$. The display device 11 displays the impulse response $g(t)$ having been calculated by the device for impulse response measurement 10.

With reference to FIG. 2, a system of measuring an impulse response for a measuring system including a speaker comprises a noise attenuating room 4 including a speaker 5 and a microphone 6, a device for impulse response measurement 10 for measuring an impulse response for the measuring system including the noise attenuating room 4 and a display device 11 for displaying e.g. a wave shape of an impulse response having been measured by the device for impulse response measurement 10. In FIG 2, equivalent components as in FIG. 1 are referred to with the same symbols as in FIG. 1, description in detail being omitted. The device for impulse response measurement 10 outputs a W-TSP signal $x(t)$ for measuring an impulse response to the speaker 5. With this, the signal $x(t)$ is eradiated in the noise attenuating room 4, and a signal $y(t)$ is received by the microphone 6. The device for impulse response measurement 10 inputs the signal $y(t)$ having been received by the microphone 6 and calculates an impulse response $g(t)$ by performing a convolution computation.

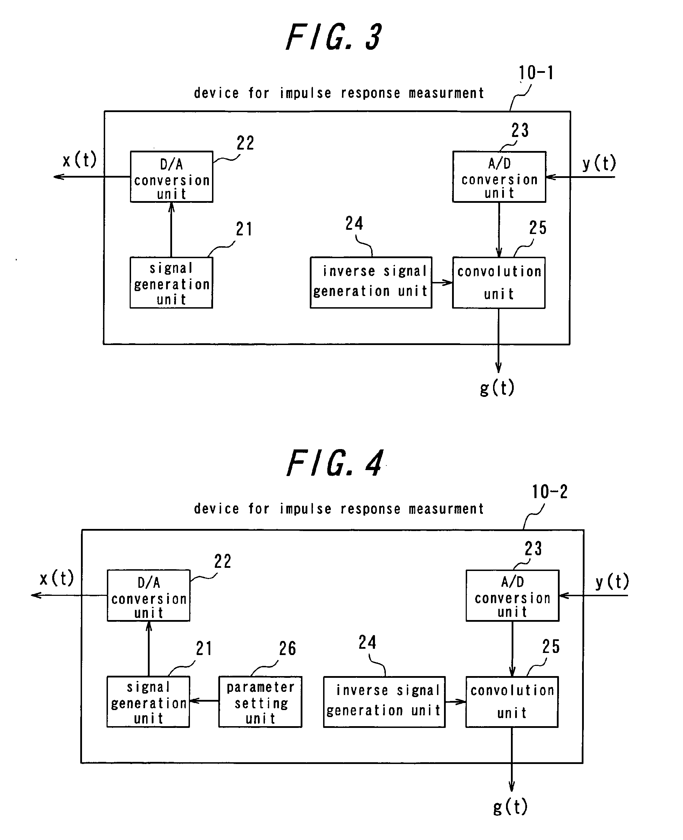

The device for impulse response measurement 10 shown in FIGs. 1 and 2 will be described next in detail. FIG. 3 is a block diagram showing a first embodiment of the device for impulse response measurement 10. This device for impulse response measurement 10-1 comprises a signal generation unit 21 for generating a W-TSP signal $x(t)$, a D/A conversion unit 22 for converting the W-TSP signal into an analog signal, an A/D conversion unit 23 for converting the signal $y(t)$ into a digital signal, an inverse signal generation unit 24 for generating an inverse W-TSP signal $x^{-1}(t)$ and a convolution unit 25 for calculating an impulse response $g(t)$ by convoluting the signal $y(t)$ mentioned above and the inverse W-TSP signal $x^{-1}(t)$.

The operations will next be explained. After the beginning of an impulse response measurement, the signal generation unit 21 of the device for impulse response measurement 10-1 generates a W-TSP signal $x(t)$ that can be obtained by transforming onto the time axis an $H(k)$ satisfying the above-mentioned formulas (3) to (5). With this signal $x(t)$ having the same signal length as a TSP signal or a Log-TSP signal, the measurement accuracy can be improved. The D/A conversion unit 22 converts the digital signal $x(t)$ having been generated by the signal generation unit 21 into an analog signal $x(t)$, which is then output to the headphone 2 shown in FIG. 1 or the speaker 5 shown in FIG 2. The A/D conversion unit 23 inputs an analog signal $y(t)$ having been received by the microphone 3 shown in FIG. 1 or the microphone 6 shown in FIG. 2 and convert the signal into a digital signal $y(t)$. The inverse signal generation unit 24 generates an inverse W-TSP signal $x^{-1}(t)$ that can be obtained by transforming onto the time axis the inverse W-TSP signal $H^{-1}(k)$ on DFT shown in above-mentioned formula (6). The convolution unit 25 convolutes the signal $y(t)$ having been converted by the A/D conversion unit 23 and the inverse W-TSP signal $x^{-1}(t)$ having been generated by the inverse signal generation unit 24 to calculate an impulse response $g(t)$. The impulse response $g(t)$ having been calculated in this way is displayed on a display device 11 shown in FIG. 1 or FIG. 2.

A second embodiment of the device for impulse response measurement will be described with reference to FIG. 4. The device for impulse response measurement 10-2 comprises a parameter setting unit 26 as well as a signal generation unit 21 shown in FIG. 3, a D/A conversion unit 22, an A/D conversion unit 23, an inverse signal generation unit 24 and a convolution unit 25. In FIG. 4, equivalent components are referred to with the same symbols as in FIG. 3, description in detail thereof being omitted.

The parameter setting unit 26 sets a parameter $n$ (=1,..., N/2) that determines characteristics of the W-TSP signal $x(t)$ and outputs the parameter to the signal generation unit 21. The signal generation unit 21 generates a W-TSP signal x(t) with the use of the parameter n having been set by the parameter setting unit 26. Herein the parameter n may be a number within the range of 1 to N/2. Referring to formulas (3) to (5), if the parameter n is close to 1, the signal generation unit 21 generates a W-TSP signal x(t) having a characteristic similar to that of a TSP signal. If the parameter n is close to N/2, on the other hand, the signal generation unit 21 generates a W-TSP signal x(t) having a characteristic similar to that of a Log-TSP signal. This is because, fn being a frequency determining a border between the lower frequency band and the higher frequency band as explained above, the border is located at a lower frequency in the case where n is close to 1, providing the W-TSP signal x(t) with a characteristic similar to that of a TSP signal. In the case where n is close to N/2, on the other hand, the border is located at a higher frequency, providing the W-TSP signal x(t) with a characteristic similar to that of a Log-TSP signal.

Evaluation results of a level of a noise included in an impulse result in the case where the impulse response is measured with respect to each of a W-TSP signal, a TSP signal of the prior art and a Log-TSP signal as a measuring signal, in each of the measuring systems shown in FIGs. 1 and 2 will be explained next. In order to equalize the conditions for every measuring signal, the length and the maximum amplitude of the measuring signals are made equal. The length of the measuring signal is 65,536, and m is N/4 for the TSP signal and the Log-TSP signal, and $\alpha$, $\beta$, n are 0.1, 2, 2,684 respectively for the W-TSP signal.

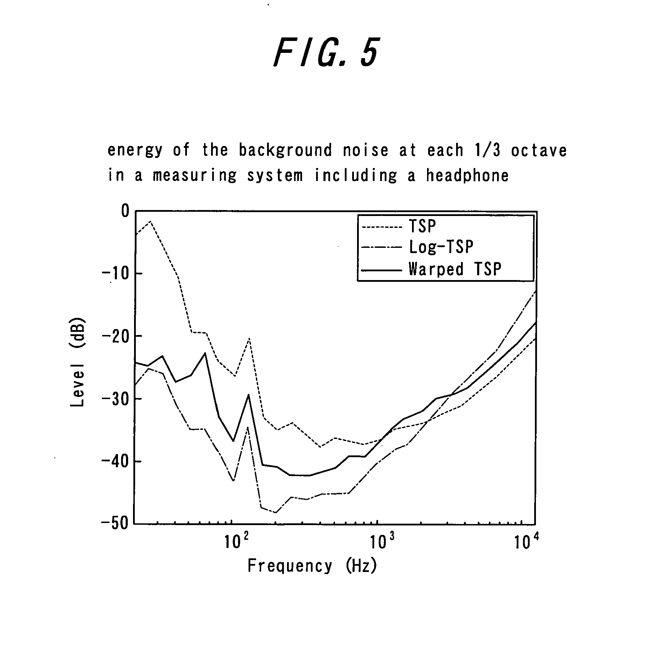

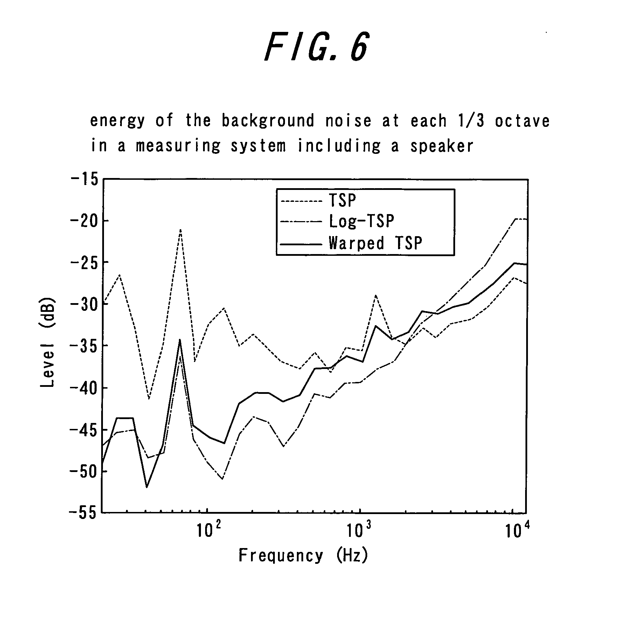

FIG. 5 is a diagram of energy transition at every 1/3 octave of a background noise of the measuring system shown in FIG. 1. FIG. 6 is a diagram of energy transition at every 1/3 octave of a background noise of the measuring system shown in FIG. 2. In each of FIGs. 5 and 6, the horizontal axis represents the frequency, and the vertical axis represents the energy level (the level of background noise inhibition). The closer to -50 dB the energy level is, the background noise is restrained the more effectively.

According to FIGs. 5 and 6, with the use of the W-TSP signal the background noise can be restrained in a well-balanced manner over the whole range, from the lower frequencies to the higher frequencies, compared to the TSP signal or the Log-TSP signal. More specifically, having a characteristic similar to that of the Log-TSP signal in the lower frequency band and a characteristic similar to that of the TSP signal in the higher frequency band, the W-TSP signal can improve the accuracy of impulse response in a well-balanced manner over the whole range. Further, the W-TSP signal having a characteristic of the Log-TSP signal in the lower frequency band, i.e. the W-TSP signal is represented using a logarithm function as shown by $y_1(k)$ in Formula (4), effects of harmonic distortion can substantially be removed.

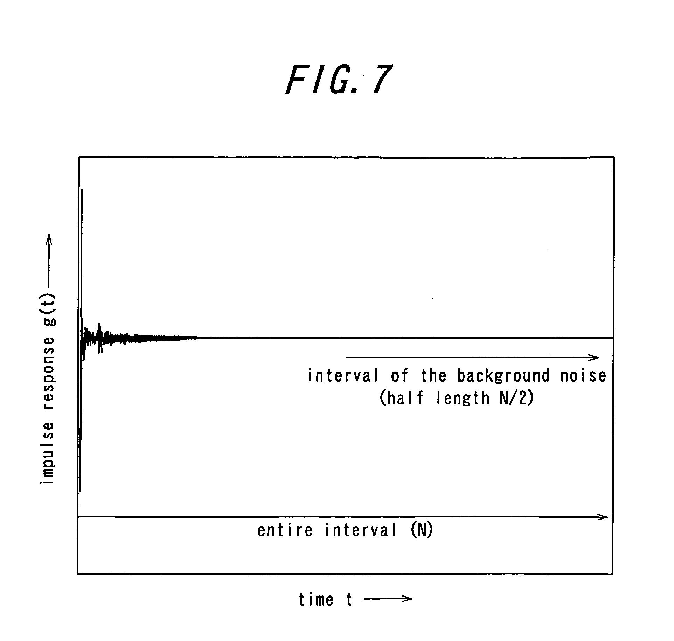

Evaluation of the noise level exhibiting such energy level can be made based on a proportion of the energy of the background noise to the whole energy of the impulse response. To be more specific, referring to FIG 7, an entire interval length is clipped out first from the impulse response g(t) in such a way that an interval of the background noise occupies a half or more of the entire interval (N). The half length (N/2) of the clipped entire interval is defined as a background noise interval. The time of convergence of the impulse response g(t), in this case, is before the background noise interval. The evaluation of the background noise (E) is calculated according to the following formula:

$$E = 10 \ \log_{10}\left( \frac{2 \sum_{t=N/2}^{N} g(t)^2}{\sum_{t=1}^{N} g(t)^2} \right) \qquad (7)$$

Referring to Formula (7), the smaller the evaluation of the background noise E is, the error of the impulse response g (t) becomes the smaller.

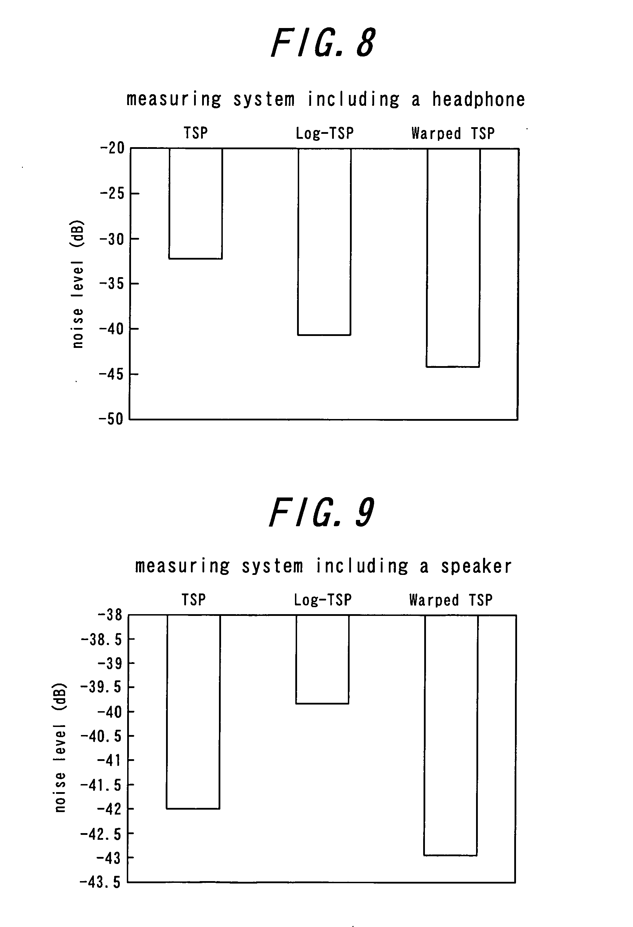

FIG. 8 is a comparative diagram showing a noise level in the measuring system shown in FIG. 1. FIG. 9 is a comparative diagram showing a noise level in the measuring system shown in FIG. 2. In each of FIGs. 8 and 9, the horizontal axis divides the signal types of the TSP signal, the Log-TSP signal and the W-TSP signal, and the vertical axis represents evaluations of the noise level.

According to FIGs. 8 and 9, the W-TSP signal has an improved noise level compared to the TSP signal and the Log-TSP signal. The measurement accuracy of impulse response can thus be improved with the use of a W-TSP signal. In obtaining the evaluation results of the noise level, a noise attenuating room 1, which is relatively reasonable, was used in FIG. 1, while a noise attenuating room 4 with higher performance was used in FIG. 2. Thus, even in a noise attenuating room, as well as in a common environment, the W-TSP signal can improve the measurement accuracy of impulse response.

As described above, according to the first embodiment of the present invention, the signal generation unit 21 of the device for impulse response measurement 10-1 generates a W-TSP signal x(t) having a characteristic of a Log-TSP signal in the lower frequency band and a characteristic of a TSP signal in the higher frequency band, and the convolution unit 25 convolutes a received signal y(t) and an inverse W-TSP signal $x^{-1}(t)$ to calculate an impulse response. With this, the background noise is restrained in a well-balanced manner over the whole range from the lower frequencies to the higher frequencies, and effects of the background noise can be reduced. Further, the measurement accuracy of the impulse response can be improved without lowering of the S/N ratio. In addition, the lower frequency band of the W-TSP signal x(t) having a characteristic of a logarithmic function, effects of harmonic distortion can substantially be removed.

According to the second embodiment of the present invention, the parameter setting unit 26 of the device for impulse response measurement 10-2 sets a parameter n determining a characteristic of the W-TSP signal x(t). It is hereby possible to provide the W-TSP signal x(t) with a characteristic similar to that of a TSP signal or with a characteristic similar to that of a Log-TSP signal. Thus, by setting the parameter n, various measuring signals suitable for acoustic transmission characteristics of a measuring system or applicable for different kinds of experiments can be generated.

Although the W-TSP signal x(t) is provided with a characteristic of a Log-TSP signal in the lower frequency band and a characteristic of a TSP signal in the higher frequency band with the use of a simple function in the embodiments of the present invention, it is also possible to design a signal in the higher frequency band based upon energy at each frequency band of a background noise measured under an actual environment, and to join the signal with the above-mentioned signal in the lower frequency band. In this case, effects of harmonic distortion can substantially be removed, and effects of the background noise can further be reduced.

Although the present invention has been described based upon preferred embodiments, the above description is provided only for understanding of the present invention, and not to limit the scope of the present invention. Various transformations and modifications are possible within the purpose and effect of the present invention, without departing from the spirit of the present invention.

Each of the devices for impulse response measurement 10, 10-1 and 10-2 comprises a CPU, a volatile recording medium such as a RAM, an involatile recording medium such as a ROM, an input device such as a keyboard or a pointing device, a display device for displaying an image or data and an computer having an interface for communicating with external devices. In these cases, each process of the signal generation unit 21, the inverse signal generation unit 24, the convolution unit 25 and the parameter setting unit 26 is performed by the CPU executing a program that describes the processes to be executed. These programs may be stored in a recording medium such as a magnetic disk (a floppy disk or a hard disk, for example), an optical disk (a CD-ROM or a DVD, for example) or a semiconductor memory for the purpose of distribution.

**Claims**

1. A method for impulse response measurement comprising steps of:

   generating a signal having a characteristic of a Log-TSP (Logarithmic-Time Stretched Pulses) signal in a lower frequency band and a characteristic of a TSP signal in a higher frequency band as a measuring signal with sweeping frequency;
   outputting said measuring signal to a measuring system;
   inputting a response signal against the measuring signal from the measuring system; and
   convoluting said response signal and an inverse measuring signal having an inverse characteristic of said measuring signal to measure an impulse response of the measuring system.

2. The method for impulse response measurement according to Claim 1, wherein a frequency of a border between said signal having a characteristic of a Log-TSP signal and said signal having a characteristic of a TSP signal is set by means of a parameter.

3. The method for impulse response measurement according to any one of Claims 1 and 2, wherein said signal having a characteristic of a Log-TSP signal is joined with said signal having a characteristic of a TSP signal by a morphing function.

4. A device for impulse response measurement comprising:

   a signal generation unit for generating a signal having a characteristic of a Log-TSP signal in a lower frequency band and a signal having a characteristic of a TSP signal in a higher frequency band as a measuring signal with sweeping frequency;
   an output unit for outputting the measuring signal to a measuring system;
   an input unit for inputting a response signal against the measuring signal from the measuring system;

**EP 1 772 713 A1**

an inverse signal generation unit for generating an inverse measuring signal having an inverse characteristic of the measuring signal; and

a convolution unit for convoluting said response signal and said measuring signal to measure an impulse response of the measuring system.

5. The device for impulse response measurement according to Claim 4, further comprising a parameter setting unit for setting a parameter with respect to said measuring signal generated from said signal generation unit to determine a frequency of a border between the measuring signal having a characteristic of a Log-TSP signal and the measuring signal having a characteristic of a TSP signal.

6. The device for impulse response measurement according to any one of Claims 4 and 5, wherein said signal generation unit joins the measuring signal having a characteristic of a Log-TSP signal with the measuring signal having a characteristic of a TSP signal with the use of a morphing function.

7. A system for impulse response measurement comprising:

a device for impulse response measurement for outputting a measuring signal with sweeping frequency, inputting a response signal against the measuring signal and

convoluting said response signal and an inverse measuring signal having an inverse characteristic of said measuring signal to measure an impulse response of a measuring system; and

a measuring system for inputting the measuring signal and outputting a response signal, of which an impulse response is measured,

wherein a device for impulse response measurement according to any one of Claims 4 to 6 is used.

8. A program for impulse response measurement describing processes of measuring an impulse response of a measuring system to be executed by a computer included in a device for impulse response measurement, comprising processes of:

generating a signal having a characteristic of a Log-TSP signal in the lower frequency band and a signal having a characteristic of a TSP signal in the higher frequency band as a measuring signal with sweeping frequency; outputting the measuring signal to a measuring system; inputting a response signal against the measuring signal from the measuring system; generating an inverse measuring signal having an inverse characteristic of said measuring signal; and convoluting said response signal and inverse measuring signal to measure an impulse response of the measuring system.

9. A recording medium with the program for impulse response measurement according to Claim 8 stored thereon.

**10**

# *FIG. 1*

# FIG. 2

display device

## FIG. 3

device for impulse response measurment

10-1

x(t) ← | D/A conversion unit | 22

| signal generation unit | 21

| inverse signal generation unit | 24

A/D conversion unit | 23 ← y(t)

convolution unit | 25

↓ g(t)

## FIG. 4

device for impulse response measurment

10-2

x(t) ← | D/A conversion unit | 22

| signal generation unit | 21

| parameter setting unit | 26

| inverse signal generation unit | 24

A/D conversion unit | 23 ← y(t)

convolution unit | 25

↓ g(t)

13

# *FIG. 5*

energy of the background noise at each 1/3 octave
in a measuring system including a headphone

# FIG. 6

energy of the background noise at each 1/3 octave
in a measuring system including a speaker

# FIG. 7

# FIG. 8

measuring system including a headphone

# FIG. 9

measuring system including a speaker

| INTERNATIONAL SEARCH REPORT | International application No. |
|---|---|
| | PCT/JP2005/012812 |

**A. CLASSIFICATION OF SUBJECT MATTER**
Int.Cl$^7$ G01H17/00, 3/00, G10K15/00

According to International Patent Classification (IPC) or to both national classification and IPC

**B. FIELDS SEARCHED**

Minimum documentation searched (classification system followed by classification symbols)
Int.Cl$^7$ G01H1/00-17/00, G10K15/00-15/12

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JST7580(JOIS), JSTPlus(JOIS)

**C. DOCUMENTS CONSIDERED TO BE RELEVANT**

| Category* | Citation of document, with indication, where appropriate, of the relevant passages | Relevant to claim No. |
|---|---|---|
| A | Takuya FUJIMOTO, "Teiiki Band deno SNhi Kaizen o Mokuteki toshita TSP Shingo ni Kansuru Kento", The Acoustical Society of Japan (ASJ) Kenkyu Happyokai Koen Ronbunshu, Shuki 1, 29 September, 1999 (29.09.99), pages 433 to 434 | 1-9 |
| A | Fumiaki SATO, "Shitsunai Onkyo Impulse Oto no Sokutei Gijutsu", The Journal of the Acoustical Society of Japan Shi, Vol.58, No.10, 01 October, 2002 (01.10.02), pages 669 to 676 | 1-9 |

| ☒ Further documents are listed in the continuation of Box C. | ☐ See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 September, 2005 (29.09.05) | 11 October, 2005 (11.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

| INTERNATIONAL SEARCH REPORT | International application No. |
|---|---|
| | PCT/JP2005/012812 |

C (Continuation).   DOCUMENTS CONSIDERED TO BE RELEVANT

| Category* | Citation of document, with indication, where appropriate, of the relevant passages | Relevant to claim No. |
|---|---|---|
| P,X | Shoga MORISEI, Toshio IRINO, Hideki SAKANO, Hideki KAWAHARA, "An Soon ni Ganken na Impulse Oto Sokuteiyo Shingo no Sekkei Shuho", The Institute of Electronics, Information and Communication Engineers Gijutsu Kenkyu Hokoku, Vol.104, No.247, 13 August, 2004 (13.08.04), pages 37 to 42 | 1-9 |
| P,X | Shoga MORISEI, Toshio IRINO, Hideki SAKANO, Hideki KAWAHARA, "An Soon ni Motoduita Impulse Oto Sokuteiyo Shingo no Sekkei Shuho", The Acoustical Society of Japan (ASJ) Kenkyu Happyokai Koen Ronbunshu, Shuki 1, 21 September, 2004 (21.09.04), pages 593 to 594 | 1-9 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H5118906 A
- JP H6265400 A

- JP H8248077 A

### Non-patent literature cited in the description

- **JUN KASHIWAGI.** M sequence and its application. Shoko-do, 1996
- **N. AOSHIMA.** Computer-generated pulse signal applied for sound measurement. *J. Acoust, Soc, AM.,* 1981, vol. 69 (5), 1484-1488
- **FUMIAKI SATO.** Measurement technique for in-room acoustic impulse response. *Onkyo-shi,* 2002, vol. 58 (10), 669-676
- **YUTAKA KANEDA.** Experimental study of error in impulse response measurement with the M Sequence. *Onkyo-shi,* 1996, vol. 52 (10), 752-759

- **TAKUYA FUJIMOTO.** Study of the TSP signal for the purpose of improving the SN ration in the lower frequency band. *Onko-ron,* 1999, 433-434
- **TAKUYA FUJIMOTO.** Study of the TSP signal for the purpose of improving the SN ration in the lower frequency band - removing the harmonic distortion. *Onko-ron,* 2000, 555-556
- **NAOYA MORITANI ; YUTAKA KANEDA.** Study of nonlinear harmonic distortion in the logarithmic TSP signal. *Onko-ron,* 2004, 637-638